Europäisches Patentamt

European Patent Office

Office européen des brevets

(19)

(11) EP 0 638 785 B1

(12) **EUROPÄISCHE PATENTSCHRIFT**

(45) Veröffentlichungstag und Bekanntmachung des Hinweises auf die Patenterteilung:
**18.07.2001 Patentblatt 2001/29**

(51) Int Cl.⁷: **G01F 1/58**, G01F 1/60

(21) Anmeldenummer: **94112530.4**

(22) Anmeldetag: **10.08.1994**

(54) **Vorrichtung zur Messung des Stroms einer ein Messrohr durchströmenden Flüssigkeit**

Device for the flow measurement of a liquid flowing through a measuring tube

Dispositif pour la mesure de l'écoulement d'un liquide à travers un tuyau de mesure

(84) Benannte Vertragsstaaten:
**CH DE DK FR GB LI NL**

(30) Priorität: **11.08.1993 DE 4326991**

(43) Veröffentlichungstag der Anmeldung:
**15.02.1995 Patentblatt 1995/07**

(73) Patentinhaber: **Fischer & Porter GmbH**
**D-37079 Göttingen (DE)**

(72) Erfinder:
• **Nissen, Peter, Dr.**
**D-37124 Rosdorf (DE)**

• **Schwiderski, Hans Werner**
**D-37176 Nörten-Hardenberg (DE)**

(74) Vertreter: **Liska, Horst, Dr.-Ing. et al**
**Weickmann & Weickmann**
**Patentanwälte**
**Postfach 860 820**
**81635 München (DE)**

(56) Entgegenhaltungen:
**EP-A- 0 451 308          EP-A- 0 518 285**
**EP-A- 0 547 751          WO-A-92/13256**

**Beschreibung**

Die Erfindung betrifft eine Vorrichtung zur Messung des Stroms einer ein im Wesentlichen waagerecht angeordnetes Messrohr durchströmenden, frei verschiebbare elektrische Ladungen enthaltenden Flüssigkeit, mit einer Magnetanordnung zur Erzeugung von wenigstens zwei das Messrohr durchsetzenden, im Wesentlichen spiegelsymmetrisch zu einer die Achse des Messrohrs enthaltenden Vertikalebene verlaufenden Magnetfeldzuständen, von denen der erste eine das Messrohr schneidende erste Horizontalebene mit einem im Wesentlichen beidseitig der ersten Horizontalebene gleichsinnigen Verlauf durchsetzt und von denen der zweite mit einem im Wesentlichen beidseitig der ersten Horizontalebene gegensinnigen Verlauf in wenigstens einem auf der Vertikalebene und der ersten Horizontalebene liegenden Punkt Null ist, mit einem einzigen Paar von beidseitig der Vertikalebene an dem Messrohr angebrachten Elektroden zur Erfassung von Ladungsverschiebungen in der Flüssigkeit und mit einer Schaltungsanordnung, die dazu eingerichtet ist, die zwischen den Elektroden im ersten Magnetfeldzustand bestehende, meist nur ungefähr dem Strom der Flüssigkeit proportionale Spannung Ur und die zwischen den Elektroden im zweiten Magnetfeldzustand bestehende Spannung Ug zu erfassen, und auf Grundlage der beiden Spannungen Ur, Ug die Spannung Ur zu einem dem Strom der Flüssigkeit im Wesentlichen proportionalen Ausgangssignal zu korrigieren.

Aus der EP 518 285 A1 ist eine Vorrichtung der vorstehend genannten Art bekannt. Bei dieser bekannten Vorrichtung liegen die Elektroden in einer Horizontalebene, die mit der genannten ersten Horizontalebene der beiden Magnetfeldzustände übereinstimmt. Bei dieser Vorrichtung hat es sich gezeigt, dass kein eindeutiger Zusammenhang zwischen der erstgenannten Spannung Ur und dem Strom der Flüssigkeit besteht, dieser Zusammenhang vielmehr vom Strömungsprofil der Flüssigkeit abhängig ist. Ein und derselbe Wert der ersten Spannung Ur bedarf daher abhängig vom Strömungsprofil unterschiedlicher Korrekturen, die von der Schaltungsanordnung der bekannten Vorrichtung nicht vorgenommen werden können, da diese Schaltungsanordnung unterschiedliche Strömungsprofile nicht erkennt.

Aus der EP 0 451 308 A1 ist eine magnetisch-induktive Durchflussmesseinrichtung bekannt, bei der zwei Elektroden in konventioneller Weise wie bei dem Gegenstand der EP 0 518 285 A1 an diametral einander gegenüberliegenden Stellen des Innenumfangs des Messrohrs vorgesehen sind. Besonderheit des Durchflussmessers nach der EP O 451 308 A1 ist, dass ein zweites Elektrodenpaar unterhalb der konventionell angeordneten Elektroden vorgesehen ist. Dieses zweite Elektrodenpaar dient zur Messwerterfassung bei nur teilweise gefülltem Messrohr, insbesondere bei Füllhöhen kleiner 50%, bei denen mit dem konventionell angeordneten Elektrodenpaar keine Messspannung mehr registriert werden kann.

Eine Durchflussmessung bei Teilfüllung des Messrohrs erfolgt dadurch, dass bei verschiedenen Magnetfeldzuständen die jeweils zugeordneten Messspannungen an dem unteren Elektrodenpaar abgegriffen und über eine Signalweiche einem jeweiligen Speicher zugeführt werden. Eine Korrekturschaltung übernimmt die Spannungswerte aus den Speichern, um sie mittels empirischer Parameter zu verarbeiten. Die dabei vorgenommene Korrektur berücksichtigt den Teilfüllungszustand des Messrohrs, so dass am Ausgang der Korrekturschaltung ein den Strom der Flüssigkeit repräsentierendes Messergebnis abgreifbar ist. Für den Fall der Messung bei vollständig gefülltem Messrohr wird in der EP 0 451 308 A1 die Verwendung der konventionell angeordneten Messelektroden empfohlen.

Aufgabe der Erfindung ist es, eine Vorrichtung der eingangs genannten Art mit nur einem Elektrodenpaar bereitzustellen, welche zuverlässige Durchflussmessungen unabhängig vom jeweiligen Strömungsprofil der Flüssigkeit im Messrohr ermöglicht.

Zur Lösung dieser Aufgabe ist die Vorrichtung dadurch gekennzeichnet, dass die Elektroden in einer zweiten Horizontalebene liegen, die von der ersten Horizontalebene derart versetzt ist, dass ein vom Strom der Flüssigkeit, nicht aber vom Strömungsprofil der Flüssigkeit abhängiger eindeutiger Zusammenhang zwischen den Spannungen Ug und Ur einerseits und dem Strom der Flüssigkeit andererseits besteht, und dass die Schaltungsanordnung dazu eingerichtet ist, auf der Basis eines jeweiligen Wertes des Quotienten Ug/Ur aus den beiden Spannungen Ug und Ur einen Korrekturfaktor $\alpha$ zur Korrektur der Spannung Ur zu bestimmen. Vorzugsweise umfasst die Schaltungsanordnung einen Taktgeber, der dazu eingerichtet ist, die Magnetanordnung sowie eine Weiche zu steuern, an deren Eingang die Elektroden über einen Verstärker angeschlossen sind, wobei die vom Taktgeber gesteuerte Weiche dazu eingerichtet ist, die im ersten Magnetfeldzustand bestehende Spannung Ur mittels eines ersten Kanals und die im zweiten Magnetfeldzustand bestehende Spannung Ug mittels eines zweiten Kanals einem Quotientenbildner zum Bilden des Spannungsquotienten Ug/Ur zuzuführen. Die Schaltungsanordnung weist ferner eine mit dem Quotientenbildner elektrisch verbundene Korrekturschaltung zur Bestimmung des Korrekturwertes $\alpha$ auf der Basis des Quotienten Ug/Ur und einen Multiplikator zur Multiplikation des Korrekturwertes $\alpha$ mit der Spannung Ur auf, wobei ein in dem Produkt $\alpha$ Ur entsprechendes Ausgangssignal der Schaltungsanordnung den Strom der Flüssigkeit repräsentiert.

Die Erfindung wird im Folgenden an einem Ausführungsbeispiel unter Hinweis auf die beigefügten Zeichnungen beschrieben:

Fig. 1    zeigt schematisch die Vorrichtung mit zugehöriger Schaltungsanordnung,

Fig. 2    dient der Erläuterung der Wirkngsweise der Vorrichtung,

Fig. 3    dient der Erläuterung der bekannten Vorrichtung,

Fig. 4    zeigt einen ersten Magnetfeldzustand,

Fig. 5    zeigt einen zweiten Magnetfeldzustand.

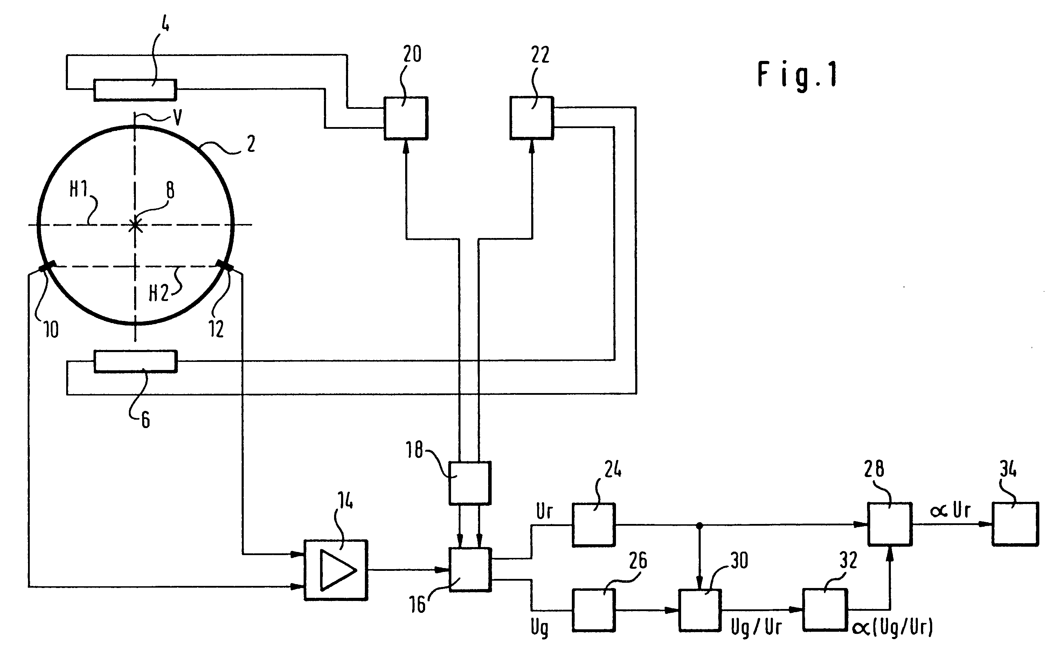

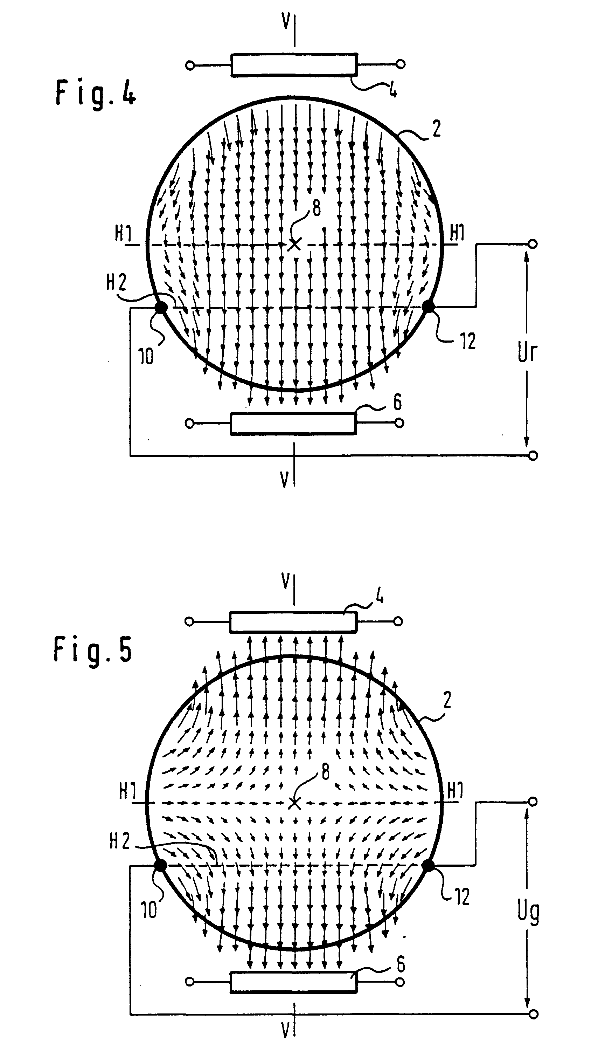

Die Vorrichtung nach Fig. 1 weist ein Meßrohr 2 auf, oberhalb dem und unterhalb dem zwei Spulen 4, 6 angeordnet sind. Die Achsen der Spulen 4, 6 liegen in einer die Achse 8 des Meßrohrs 2 enthaltenden Vertikalebene V. Mittels der Spulen 4, 6 sind die beiden in Fig. 4 und 5 dargestellten Magnetfeldzustände herzustellen. Sind die von den Spulen 4, 6 erzeugten Magnetfeldzustände gleichsinnig, ergibt sich der Magnetfeldzustand nach Fig. 4. Dieser Magnetfeldzustand durchsetzt eine das Meßrohr 2 durchsetzende Horizontalebene H1, in der - in diesem Ausführungsbeispiel - die Achse 8 des Meßrohrs liegt.

Im Magnetfeldzustand nach Fig. 5 sind die von den Spulen 4, 6 ausgehenden Magnetfelder gegensinnig, so daß um die Achse 8 des Meßrohrs 2 herum praktisch kein Magnetfeld ist, das Magnetfeld vielmehr aus dem Mittelbereich des Meßrohrs 2 gedrängt ist.

Ersichtlich sind beide Magnetfeldzustände nach Fig. 4 und 5 im wesentlichen spiegelsymmetrisch zu der Vertikalebene V.

Beidseitig der Vertikalebene V sind an dem Meßrohr 2 Elektroden 10, 12 angebracht, die in bekannter Weise der Erfassung von Ladungsverschiebungen in der das Meßrohr 2 durchströmenden Flüssigkeit dienen. Diese Ladungsverschiebungen werden in bekannter Weise durch die Magnetfeldzustände, wie sie beispielsweise im Zusammenhang mit Fig. 4 und 5 erläutert sind, hervorgerufen.

Die Elektroden 10, 12 sind über einen Verstärker 14 an einen Eingang einer Weiche 16 angeschlossen. Diese Weiche 16 wird von einem Taktgeber 18 gesteuert, der auch zwei Treiber 20, 22 der Spulen 4, 6 steuert. Die Elektroden 10, 12 liegen in einer Horizontalebene H2, die von der Horizontalebene H1 der Magnetfeldzustände versetzt ist.

Es kommt für die Wirkungsweise der Erfindung nicht darauf an, daß exakt die beiden Magentfeldzustände nach Fig. 4 und 5 verwendet werden, nur muß die Horizontalebene H1 versetzt von der Horizontalebene H2 liegen, was durch geeignete unterschiedliche Intensität der Erregung der Spulen 4, 6 in den beiden Magnetfeldzuständen erfolgen kann, aber auch oder überdies durch unterschiedliche Formgebung der Spulen 4, 6.

Im vorliegenden Beispiel wird die zwischen den Spulen 10, 12 im Magnetfeldzustand nach Fig. 4 abgegriffene Spannung Ur und die zwischen den Elektroden 10, 12 im Magnetfeldzustand nach Fig. 5 bestehende Spannung Ug genannt. Die Spannung Ur ist die unkorrigierte Spannung, die also zu korrigieren ist. Der Korrektur dient die Spannung Ug. Die Spannung Ur gelangt in einen Kanal 24; die Spannung Ug in einen Kanal 26. Die Spannung Ur wird einem Eingang eines Multiplikators 28 und einem Eingang eines Quotientenbildners 30 zugeführt. Einem anderen Eingang des Quotientenbildners 30 wird die Spannung Ug zugeführt. Ein Signal, das dem Quotienten Ug/Ur entspricht, wird von einem Ausgang des Quotientenbildners dem Eingang einer Korrekturschaltung 32 zugeführt, die dem Quotienten Ug/Ur, je nach seinem Wert, einen Korrekturfaktor $\alpha$ (Ug/Ur) zuordnet. Dieser Korrekturfaktor $\alpha$ wird einem zweiten Eingang des Multiplikators 28 zugeführt. Ein Signal, das dem Produkt von $\alpha$ und Ur entspricht, gelangt in einen Eingang einer Ausgangschaltung 34, die etwa in einem Anzeigegerät oder einem Schreibgerät ein Signal liefert, das $\alpha$. Ur entspricht.

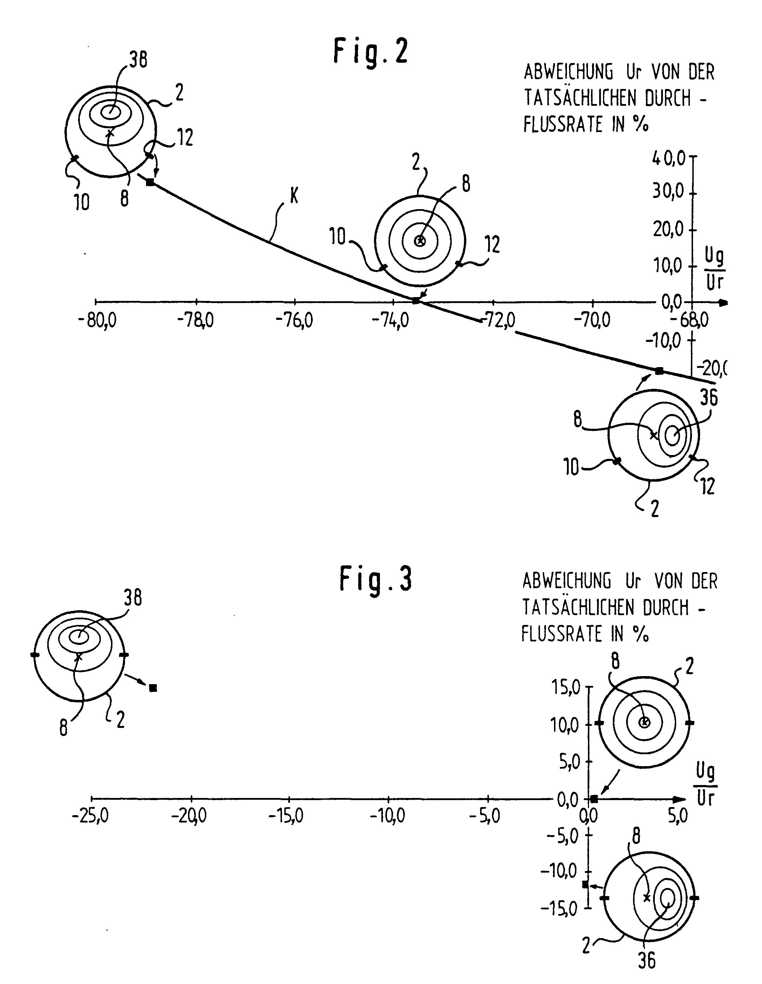

Bei einer bekannten Vorrichtung entsprechen die Abweichungen von Ur von den tatsächlichen Durchflußraten der Flüssigkeit durch das Meßrohr 2 in Prozent in Abhängigkeit von Ug/Ur Meßpunkten, wie sie in Fig. 3 dargestellt sind. Ist Ug/Ur gleich Null, so ist bei um die Achse des Meßrohrs 2 rotationssymmetrischem Strömungsprofil die Abweichung Null. Bei einem Spannungsprofil mit von der Achse nach rechts versetztem Stromdichtemaximum 36 (gleiches gilt für eine Versetzung nach links) ist Ug/Ur ebenfalls gleich Null; jedoch beträgt die Abweichung etwa -12 % . Diese mangelnde Eindeutigkeit wird durch die Erfindung behoben. Der Vollständigkeit halber wird noch erwähnt, daß bei einer Versetzung der maximalen Stromdichte 38 nach oben (gleiches gilt für nach unten) Ug/Ur etwa -22 wird und dies einer Abweichung von 15 % entspricht.

Sind die Ebenen H1, H2 gegeneinander versetzt, wie oben in Zusammenhang mit dem Ausführungsbeispiel beschrieben, so tritt überraschenderweise die Mehrdeutigkeit nicht auf, wie aus Fig. 2 hervorgeht. Ist das Maximum der Stromdichte 36 von der Achse 8 nach rechts versetzt, so ist bei Ug/Ur = -68,5 die Abweichung -20 %, bei um die Achse 8 rotationssymmetrischem Strömungsprofil ist Ug/Ur = -73,5 und die Abweichung 0 %. Befindet sich das Stromdichtemaximum 38 oberhalb der Achse 8, so ist Ug/Ur= -79 und die Abweichung 35 % . Die Kurve K in Fig. 2 zeigt den eindeutigen Zusammenhang. Die jeweiligen Ordinaten der Kurve K lassen die Berechnung der entsprechenden $\alpha$ Werte direkt zu

$$\left(\alpha = \frac{1}{1 + \dfrac{K}{100}}\right)$$

## Patentansprüche

1. Vorrichtung zur Messung des Stroms einer ein im Wesentlichen waagerecht angeordnetes Messrohr (2) durchströmenden, frei verschiebbare elektrische Ladungen enthaltenden Flüssigkeit, mit einer Magnetanordnung (4, 6) zur Erzeugung von wenigstens zwei das Messrohr durchsetzenden, im Wesentlichen spiegelsymmetrisch zu einer die Achse (8) des Messrohrs (2) enthaltenden Vertikalebene (V) verlaufenden Magnetfeldzuständen (Fig. 4 und 5), von denen der erste (Fig. 4) eine das Messrohr (2) schneidende erste Horizontalebene (H1) mit einem im Wesentlichen beidseitig der ersten Horizontalebene (H1) gleichsinnigen Verlauf durchsetzt und von denen der zweite (Fig. 5) mit einem im Wesentlichen beidseitig der ersten Horizontalebene (H1) gegensinnigen Verlauf in wenigstens einem auf der Vertikalebene (V) und der ersten Horizontalebene (H1) liegenden Punkt Null ist (Fig. 5), mit einem einzigen Paar von beidseitig der Vertikalebene (V) an dem Messrohr (2) angebrachten Elektroden (10, 12) zur Erfassung von Ladungsverschiebungen in der Flüssigkeit

   und mit einer Schaltungsanordnung, die dazu eingerichtet ist, die zwischen den Elektroden (10, 12) im ersten Magnetfeldzustand (Fig. 4) bestehende, meist nur ungefähr dem Strom der Flüssigkeit proportionale Spannung Ur und die zwischen den Elektroden (10, 12) im zweiten Magnetfeldzustand (Fig. 5) bestehende Spannung Ug zu erfassen, und auf Grundlage der beiden Spannungen Ur, Ug die Spannung Ur zu einem dem Strom der Flüssigkeit im Wesentlichen proportionalen Ausgangssignal zu korrigieren, **dadurch gekennzeichnet,** dass die Elektroden (10, 12) in einer zweiten Horizontalebene (H2) liegen, die von der ersten Horizontalebene (H1) derart versetzt ist, dass ein vom Strom der Flüssigkeit, nicht aber vom Strömungsprofil der Flüssigkeit abhängiger eindeutiger Zusammenhang zwischen den Spannungen Ug und Ur einerseits und dem Strom der Flüssigkeit andererseits besteht, und dass die Schaltungsanordnung dazu eingerichtet ist, auf der Basis eines jeweiligen Wertes des Quotienten Ug/Ur aus den beiden Spannungen Ug und Ur einen Korrekturfaktor $\alpha$ zur Korrektur der Spannung Ur zu bestimmen.

2. Vorrichtung nach Anspruch 1, **dadurch gekennzeichnet,** dass die Schaltungsanordnung einen Taktgeber (18) umfasst, der dazu eingerichtet ist, die Magnetanordnung (4, 6) sowie eine Weiche (16) zu steuern, an deren Eingang die Elektroden (10, 12) über einen Verstärker (14) angeschlossen sind, wobei die vom Taktgeber (18) gesteuerte Weiche (16) dazu eingerichtet ist, die im ersten Magnetfeldzustand bestehende Spannung Ur mittels eines ersten Kanals (24) und die im zweiten Magnetfeldzustand bestehende Spannung Ug mittels eines zweiten Kanals (26) einem Quotientenbildner (30) zum Bilden des Spannungsquotienten Ug/Ur zuzuführen, und dass die Schaltungsanordnung ferner eine mit dem Quotientenbildner (30) elektrisch verbundene Korrekturschaltung (32) zur Bestimmung des Korrekturwerts $\alpha$ auf der Basis des Quotienten Ug/Ur und einen Multiplikator (28) zur Multiplikation des Korrekturwerts $\alpha$ mit der Spannung Ur aufweist.

## Claims

1. Device for measuring the flow of a liquid containing freely movable electrical charges and flowing through a substantially horizontally arranged measuring tube (2), with a magnet arrangement (4, 6) for producing at least two magnetic field states (Fig. 4 and 5) penetrating through the measuring tube and extending substantially symmetrically to a vertical plane (V) containing the axis (8) of the measuring tube (2), of which the first (Fig. 4) penetrates a first horizontal plane (H1) cutting the measuring tube (2) with a course in substantially the same direction on either side of the first horizontal plane (H1) and of which the second (Fig. 5) with a course substantially in opposite directions on either side of the first horizontal plane (H1) is zero (Fig. 5) in at least one point located on the vertical plane (V) and the first horizontal plane (H1), with a single pair of electrodes (10, 12) arranged on the measuring tube (2) on either side of the vertical plane (V) for detecting charge transfers in the liquid, and with a circuit arrangement which is designed to detect the voltage Ur, generally only approximately proportional to the flow of the liquid, between the electrodes (10, 12) in the first magnetic field state (Fig. 4) and the voltage Ug between the electrodes (10, 12) in the second magnetic field state (Fig. 5) and to correct the voltage Ur to an output signal substantially proportional to the flow of the liquid on the basis of the two voltages Ur, Ug, characterised in that the electrodes (10, 12) are located in a second horizontal plane (H2) which is offset from the first horizontal plane (H1) in such a way that there is a clear connection, dependent on the flow of the liquid but not on the flow profile of the liquid, between the voltages Ug and Ur on the one hand and the flow of the liquid on the other hand, and in that the circuit arrangement is designed to determine a correction factor a for correcting the voltage Ur, on the basis of a respective value of the quotient Ug/Ur of the two voltages Ug and Ur.

2. Device according to claim 1, characterised in that the circuit arrangement comprises a clock generator (18) which is designed to control the magnet arrangement (4, 6) and a switch (16), to the input of which the electrodes (10, 12) are connected via an amplifier (14), wherein the switch (16) controlled by the clock generator (18) is designed to supply the voltage Ur in the first magnetic field state by means of a first channel (24) and the voltage Ug in the second magnetic field state by means of a second channel (26) to a quotient former (30) for forming the voltage quotient Ug/Ur, and in that the circuit arrangement also has a correction circuit (32) electrically connected to the quotient former (30) for determining the correction value a on the basis of the quotient Ug/Ur, and a multiplier (28) for multiplication of the correction value a by the voltage Ur.

## Revendications

1. Dispositif de mesure du débit d'un liquide s'écoulant à travers un tube de mesure (2) disposé sensiblement horizontalement, le liquide contenant des charges électriques librement déplaçables, comprenant un ensemble d'aimants (4, 6) destiné à créer au moins deux conditions de champ magnétique (Fig. 4 et 5) traversant le tube de mesure, sensiblement symétriques par rapport à un plan vertical (V) contenant l'axe (8) du tube de mesure (2), la première condition de champ magnétique (Fig. 4) traversant un premier plan horizontal (H1) intersectant le tube de mesure (2), suivant un trajet sensiblement de même sens de part et d'autre du premier plan horizontal (H1), et la deuxième condition de champ magnétique(Fig. 5), suivant un trajet sensiblement de sens opposé de part et d'autre du premier plan horizontal (H1), correspondant à zéro en au moins un point situé dans le plan vertical (V) et dans le premier plan horizontal (H1), comprenant une seule paire d'électrodes (10, 12) prévues sur le tube de mesure (2), de part et d'autre du plan vertical (V), pour détecter les transferts de charge dans le liquide, et comprenant un montage électrique qui est conçu pour détecter la tension Ur qui règne entre les électrodes (10, 12) dans la première condition de champ magnétique (Fig. 4) et qui, habituellement, n'est qu'approximativement proportionnelle au débit du liquide et pour détecter la tension Ug qui règne entre les électrodes (10, 12) dans la deuxième condition de champ magnétique (Fig. 5) et, sur la base des deux tensions Ur, Ug, de corriger la tension Ur en un signal de sortie sensiblement proportionnel au débit du liquide, **caractérisé en ce que** les électrodes (10, 12) se trouvent dans un deuxième plan horizontal (H2) qui est décalé par rapport au premier plan horizontal (H1) de telle sorte qu'un rapport univoque, dépendant du débit du liquide, mais non pas du profil d'écoulement du liquide, existe entre les tensions Ug et Ur d'une part et le débit du liquide d'autre part, **et en ce que** le montage électrique est conçu pour déterminer, sur la base d'une valeur du quotient Ug/Ur des deux tensions Ug et Ur, un facteur de correction $\alpha$ destiné à corriger la tension Ur.

2. Dispositif selon la revendication 1, **caractérisé en ce que** le montage électrique comprend une minuterie (18) qui est conçue pour commander l'ensemble d'aimants (4, 6) ainsi qu'un dispositif d'aiguillage (16), à l'entrée duquel les électrodes (10, 12) sont raccordées par l'intermédiaire d'un amplificateur (14), le dispositif d'aiguillage (16) commandé par la minuterie (18) étant conçu pour acheminer la tension Ur qui règne dans la première condition de champ magnétique, par un premier canal (24) et pour acheminer la tension Ug qui règne dans la deuxième condition de champ magnétique par un deuxième canal (26), vers un calculateur de quotients (30) afin de calculer le quotient de tensions Ug/ur, **et en ce que** le montage électrique comprend, en outre, un circuit de correction (32), raccordé électriquement au calculateur de quotients (30), destiné à déterminer la valeur de correction $\alpha$ sur la base du quotient Ug/ur, et comprend également un multiplicateur (28) servant à multiplier la valeur de correction $\alpha$ par la tension Ur.

Fig.1

EP 0 638 785 B1

# Fig.2

ABWEICHUNG Ur VON DER
TATSÄCHLICHEN DURCH -
FLUSSRATE IN %

# Fig.3

ABWEICHUNG Ur VON DER
TATSÄCHLICHEN DURCH -
FLUSSRATE IN %

EP 0 638 785 B1

Fig.4

Fig.5

8